# EUROPEAN PATENT APPLICATION

(11) **EP 2 316 283 A1**
(43) Date of publication of application: **04.05.2011**
(21) Application number: 09013663.1
(22) Date of filing: 30.10.2009
(51) Int. Cl.: A23L 2/66, A61K 8/02, C09K 19/00, C11D 17/00, B65D 23/00, B65D 25/00, B65D 65/16

(54) **Container comprising non-alcoholic compositions with visible active ingedrients**

(71) Applicant: Nestec S.A., 1800 Vevey (CH)
(72) Inventor: Jung, Jin-Mi, 1066 Epalinges (CH); Palzer, Stefan, 1066 EpalingesYork YO32 9FX (GB); Saclier, Christian, 1006 Lausanne (CH); Wyser, Yves, 1072 Forel (Lavaux) (CH); Valles-Pamies, Baltasar, 52037 Sansepolcro (IT)
(74) Representative: Marquardt, Ulf

(57) **Abstract**

The present invention generally relates to at least partially transparent compositions intended for human or animal consumption and to the packaging of such compositions. One embodiment of the present invention relates to an at least partially transparent container containing an at least partially transparent aqueous non-alcoholic composition. The container comprises at least one polarizer that makes liquid crystals present in the composition visible.

## Description

The present invention generally relates to at least partially transparent compositions intended for human or animal consumption and to the packaging of such compositions. One embodiment of the present invention relates to an at least partially transparent container containing an at least partially transparent aqueous non-alcoholic composition. The container comprises at least one polarizer that makes liquid crystals present in the composition visible.

Non-alcoholic beverages are well-established products in the beverage industry. They can be classified in ambient and refrigerated beverages. Innovations in this segment mainly reside in new beverages, such as light beverages, energy drinks, or functional beverages.

Typical functional beverages on the market today are protein-enriched drinks. Proteins, however, usually render a drink opaque and often visually unattractive to the consumer. Protein-enriched drinks are therefore usually sold in an opaque packaging.

Transparent protein containing drinks are desirable. In this respect hydrolyzed whey proteins that are clear in solution and therefore suitable for see-through bottles are available.

However, the transparency of such protein containing compositions leaves the consumer in doubt about the amount of transparent protein that is being consumed.

It would hence be desirable to have available a system that allows the consumer to visually inspect the presence and abundance of transparent active ingredients in a transparent container.

The present inventors have addressed this need.

It was consequently the object of the present invention to provide the art with a transparent composition containing at least one transparent active component and a packaging that allows it to visualize the active components that would otherwise be not visible to the naked eye.

The inventors have conducted extensive studies and were surprised to find that the object of the present invention could be achieved by the subject matter of the independent claim. The dependent claims further develop the idea of the present invention.

The inventors found that active ingredients that usually render a transparent liquid composition somewhat milky if they are added to the composition do not have this undesired effect if they are provided as liquid crystals. Liquid crystals are usually transparent to the naked eye.

The inventors further found that if a transparent food grade composition comprising liquid crystals is viewed through a polarizer the liquid crystals are visible for the consumer who can check for presence and abundance of the active ingredients.

In addition, the liquid crystals if viewed through a polarizer create a new visual effect for a transparent drink, with rainbow-like colours and/or black&white waves which are enhanced by movements or agitation. This dynamic visual effect is perceived as pleasant by the consumer.

Hence, one embodiment of the present invention is an at least partially transparent container containing an at least partially transparent aqueous non-alcoholic composition, characterized in that at least a part of the surface of the container is covered by at least one polarizer, and the composition comprises food-grade liquid crystals.

Compounds are regarded as food-grade if they are generally approved for human or animal consumption.

The container may be made from glass or plastic, for example. The glass or plastic may or may not be coloured but has to be at least partially transparent. Typical plastics that may be used for the production of the container include poly(ethylene terephthalate)(PET) or polypropylene (PP), for example.

The at least partially transparent container may consist of an partially transparent material. Alternatively, the container may also only contain a window made from transparent material, while the rest of the container is made from opaque material or covered by an opaque label.

Important is that visible light can enter and exit the container through an at least partially transparent section.

The at least partially transparent section of the at least partially transparent container exhibits a degree of transparency of at least 75 % for at least a fraction of visible light.

The degree of transparency always relates to a material thickness of 1 cm unless otherwise indicated.

The at least partially transparent section is at least partially covered by at least one polarizer.

For example, at least one polarizer may be attached to the outer surface of the container. Attaching the polarizer to the outer surface of the container has the advantage that it may be easily attached and easily removed, e.g., for recycling purposes. For example, a transparent container may be combined with polarizing labels. This would allow the visual inspection of the liquid crystals and at the same time it generate appealing visual effects.

The polarizer may also be attached to the inside of the container, if there is no risk associated with the direct contact of the consumable product with the polarizer.

Further, the at least one polarizer may be an integral component of the container wall. This would have the advantage that the polarizer would then be even more scratch resistant.

In principle, any type of polarizer may be used for the purposes of the present invention. For example, the polarizer may be an absorptive polarizer and/or a linear polarizer.

If only one polarizer is used the polarizer may be arranged around the whole container.

If the direction of the polarizer is parallel or orthogonal to the axis of the container, a maximal amount of light will pass through the polarizer. As a result, the liquid crystals can be seen before a very bright background.

The direction of a polarizer is defined as by its specific transmission axis, through which the light passes, limiting the oscillations of electromagnetic wavers to a specific plane.

If the direction of the polarizer differs by 45° from the axis of the container, light passing through the container will pass through two polarizer planes with a difference in direction of 90°. As a result, only light diffracted by the liquid crystals will be visible. The liquid crystals can be seen clearly in front of a dark background.

Any difference between the direction of the polarizer and the axis of the container may be chosen to fine tune brightness of the image and crystal contrast of the resulting image. It is a matter of very simple practical experimentation to determine the desired image.

The container may also contain more than one polarizer. If more than one polarizer is used, the directions of the polarizers may differ from each other.

If such polarizers with differing directions are attached to the container this may have the advantageous effect that the content of the container generates a different image depending on the angle and/or side the container is looked at.

For example, the container may comprise an even number of polarizers, wherein the angle between the directions of polarizers located opposite to one another is identical for all polarizer pairs, whereas neighboring polarizers differ in direction.

The container may be any kind of at least partially transparent container that is commonly used to package food or drinks. For example, the container may be a bottle or a sachet.

The liquid crystals may be any food grade liquid crystals. In particular the liquid crystals may be made from functional ingredients. For example, the liquid crystals may consist of proteins or phospholipids, for example.

Advantageously, liquid crystals are stable even in a wide acidic pH-range and therefore suitable for most beverages on the market today. Liquid-crystalline phases are abundant in living systems. In particular, biological membranes and cell membranes are a form of liquid crystals.

For example, the liquid crystals may consist of protein. They may be protein fibril assemblies, such as β-lactoglobulin crystals.

The food grade liquid crystals may have any size as long as it is large enough so that the crystals can be seen through polarizers. They may have average dimensions in the longest dimension of at least 400 nm, preferably at least 800nm.

The food grade liquid crystals may be present in any amount that is large enough, so that they are noticed through the polarizers. They may be present in an amount of at least 0.04 mg/ml of the composition, preferably at least 0.1 mg/ml of the composition.

For example, the liquid crystals may be present in the composition in a concentration range from about 0.4% wt to 4.5% wt.

Any kind of liquid crystals may be employed in the framework of the present invention.

The food grade liquid crystals may be selected from the group consisting of thermotropic liquid crystals, lyotropic liquid crystals or combinations thereof.

The food grade liquid crystals may be present in a crystal phase selected from the group consisting of the discontinuous cubic phase, the hexagonal phase, the lamellar phase, the bicontinuous cubic phase, the reverse hexagonal columnar phase, the inverse cubic phase, the nematic phase, the smectic phases, the chiral phases, the blue phases, the discotic phases, or combinations thereof.

Crystals in different crystal phases produce differing images when viewed through polarizers. Hence, the proper selection of a crystal phase may be used to produce a desired image.

Depending on the active component that is being crystallized, the crystal phase may also be selected in a way that the crystals are easy to produce and/or stable in the specific conditions of the composition.

For example, nematic or smectic β-lactoglobulin crystals may be used for the purposes of the present invention.

Any kind of non-alcoholic composition may be used in the framework of the present invention as long as it is at least partially transparent. Such at least partially transparent composition may have a degree of transparency of at least 50 %, preferably at least 75 %, even more preferred at least 85 % for at least a fraction of visible light.

The composition may be colored or colorless. It may be liquid or in gel form, for example.

The composition may be a water based drink. The drink may be a functional drink, for example. The drinks may comprise proteins in a liquid crystal phase proteins as functional ingredients, for example.

The composition may be an acidic composition as it is for example typical for beverages on the market today.

Hence the pH of the composition may be in the range of 1-6.5, for example in the range of 2.5 - 5.

The composition may also be an energy drink. In particular for performance nutrition, energy drinks often contain protein and - at the same time - a high carbohydrate content.

The composition may consequently be a beverage or a gel with a high caloric density. The caloric density may be in the range of 0 to 1 kcal/ml. At least 50 % of the calories may be derived from carbohydrates, e.g. for protein-enriched beverages; and between 0 and 5% of the calories may be derived from carbohydrates for low-calorie beverages.

The composition could also be a detergent composition, for example a shower gel. Detergent compositions often contain proteins (e.g. enzymes) as functional ingredients, which could be provided in liquid crystalline form.

Shower gels, lotions or other body care products may additionally or alternatively contain phospholipids, which - if present in the form of liquid crystals - would produce the desired images if viewed through polarizers.

The complete container of the present invention filled with the composition comprising the liquid crystals and comprising the at least one polarizer may have a degree of transparency of at least 35 %, preferably at least 50 %, even more preferred at least 75 % for at least a fraction of visible light.

Fractions of visible light are for example violet light with a wavelength of 380-450 nm, blue light with a wavelength of 450-495 nm, green light with a wavelength of 495-570 nm, yellow light with a wavelength of 570-590 nm, orange light with a wavelength of 590-620 nm, and/or red light with a wavelength of 620-750 nm.

It is clear to those skilled in the art that all features of the container described herein may be freely combined without departing from the scope of the present invention as disclosed.

Further features and advantages of the present invention are apparent from the following Examples and Figures. All percentages given in the examples are weight-%.
Figure 1 shows examples of liquid crystals in packagings with polarizers crossed at 90°. The compositions contained 2 weight-% liquid crystals at a pH of 2 in water. Three types of packagings are shown: a square PETG bottle, a glass rectangular jar and a round glass bottle.
Figure 2 shows the principle of polarizers crossed at 90°, giving a dark background, and its application to a PETG square bottle, first empty and then half filled with liquid crystals.
Figure 3 shows the principle of polarizers with parallel polarization direction, giving a light background, and its application to a PETG square bottle, first empty and then half filled with liquid crystals.
Figure 4 shows the principle of using one single polarizing band, cut at 45° relative to the polarizing direction, giving a dark background. An application for a glass round bottle is shown as an example.
Figure 5 shows the principle of using one single polarizing band, cut at 0° or 90° relative to the polarizing direction, giving a light background. An application for a glass round bottle is shown as an example.
Figure 6 shows liquid crystals in a colored water solution, visualized between cross-polarizers (Liquid crystals 1%, pH2).
Figure 7 shows liquid crystals in a 10% sugar solution, visualized between cross-polarizers, with a final concentration of liquid crystals of 1% (left) and 2% (right), respectively.
Figure 8 shows examples of liquid crystals incorporated in commercial beverages, visualized between cross-polarizers. The examples shown here are a transparent carbonated soda and a colored still beverage (Left : Transparent soda (7-up) ; Right : Colored beverage (Ice Tea)).

Example 1 explains the preparation of b-lg (β-lactoglobulin) powder to make liquid crystals.

BioPURE-β-lactoglobulin (Davisco Foods International Inc., Le Sueur, MN), which consisted of 95.9 % of β-lactoglobulin (variant A, 55.6%; variant B, 44.4%) was dissolved in Milli-Q water at 10 wt % concentration, adjusted to pH 4.6 using a 1 M HCl solution, centrifuged at 15 000 rpm for 15 min at 20°C using a Sorvall Evolution RC high speed centrifuge (Rotor SLA-1000), in order to remove non-"native"proteins. The supernatant was recovered and adjusted to pH 2, using a 1M HCl solution, and filtered through a 0.22 µm Millipore filter to further remove possible residual traces of insoluble proteins. A dialysis was performed to remove traces of ions, which affect β-lactoglobulin aggregation. The protein solution was dialyzed first against pH 2 Milli-Q water and second against Milli-Q water, using a Spectra-Por Dialysis Membrane 1, with a MWCO of 6000-8000 Da (Spectrum Laboratories, Inc., Los Angeles, CA). Dialysis tubes were previously boiled for 10 min in demineralised water in the presence of 1 mM EDTA and extensively rinsed with demineralized water. The volume ratio between the solvent and the protein solution was kept constantly at around 40 during the dialysis. The dialysis was performed at 4°C with at least 4 h between the dialysis buffer changes. After dialysis, the solution was adjusted back to pH 2. For storage, the solution was freeze-dried and placed in a desiccator at room temperature.

Example 2 describes the synthesis of the protein fiber-based liquid crystals.

Dialyzed and freeze-dried β-lactoglobulin powder was dissolved in Milli-Q water at a concentration of 2 % wt at room temperature, centrifuged at 10800g over a period of 1 h at 20°C using a Sorvall RC3C Plus centrifuge (DuPont, Newtown, CT), adjusted to pH 2 and filtered through a 0.45 µm Millipore filter. The 2% β-lactoglobulin solution was then distributed in 100 mL flasks, which were hermetically sealed and placed in a water bath for heating at 90°C during 5h. Each flask contained a magnetic bar to stir the solution during the heating process. After heating, the flasks were immediately cooled by immersion in ice-water mixtures to quench the aggregation process. The solution was checked visually for transparency.

The protein solution was concentrated by a gentle concentration method at room temperature, in order to reach a final concentration of 4% wt. This was accomplished by a nitrogen flux circulating over the solution to concentrate, which dries the water vapor forming at its surface. The solution was poured in a large beaker (at least twice the volume of the solution) which was hermetically covered with a two-hole top, one for the nitrogen flux input and one for air output. The beaker was placed onto a plate stirrer (Vibramax 110, Heidolph Instruments, Germany) and was kept in agitation in order to avoid the formation of gel crowns on the surface during the drying process. The concentrated solution was still liquid and clear. This procedure allowed the production of mixtures with beverages with a lower incorporation of water and enabled reaching higher final concentration of fibers.

Example 3 gives information on the polarizers used for our experiments and the tested packagings.

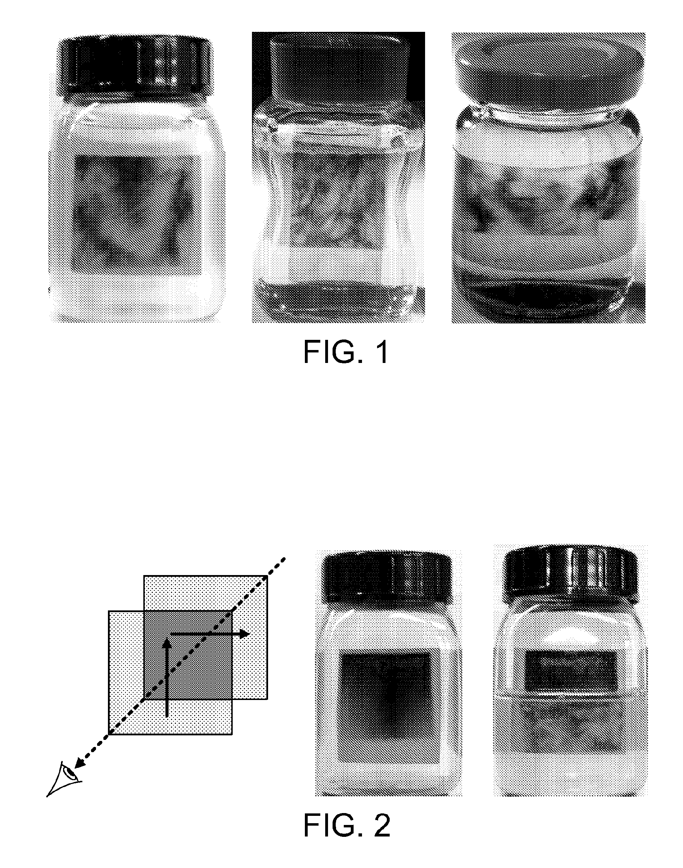

We used linear polarizers from ITOS GmbH (Germany), ref. XP38-18S. These are self-adhesive polarizers of 1.8 mm thickness, that can be sticked directly onto the packagings surface. We tested three types of packaging : a small square PETG bottle, on which two polarizers were sticked on opposite surfaces, a rectangular-shaped bottle in glass (Nescafe jar), on which two polarizers were sticked on opposite surfaces, and a round-shaped glass bottle, on which one band of polarizer was wrapped (Figure 1).

Example 4 shows the influence of the angle between the polarizers on the visual effect.

We tested two configurations of polarization angle between the polarizers.

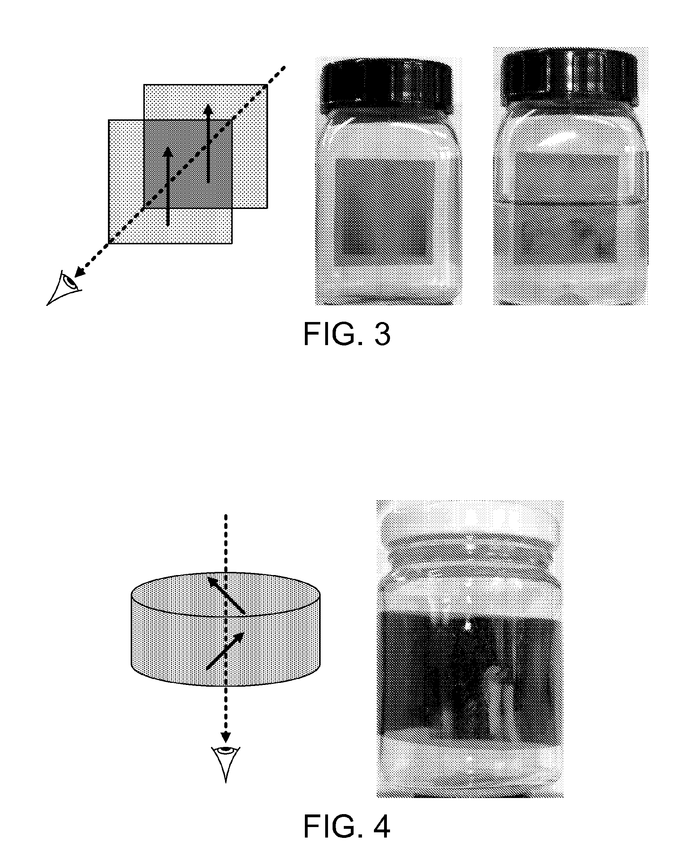

For a square bottle, two polarizers were used. There were applied with relative angles of 90° and 0° by sticking the polarizers onto the bottle with a crossed or parallel polarization direction (Figure 2 and Figure 3).

When the polarizers are crossed at 90° (Figure 2), the transmission of light is almost zero, giving a dark background. When the polarizers are parallel (angle 0°) (Figure 3), light can be still partially transmitted and the background is less dark. In both cases the liquid crystals are visible, nevertheless the intensity is higher with cross-polarizerse. The choice of the angle should mainly depend on the transparency of the beverage in which the liquid crystals will be incorporated.

For the round bottle, where one band of polarizer was used, we also tested the angles of 90° and 0° by cutting the polarizer band at a certain angle relative to the polarization angle.

If the band is cut at 45° relative to the polarization angle and is wrapped around the bottle, the effect will be equivalent to two cross-polarizers on a square bottle (Figure 2), meaning that the background will be dark (Figure 4). From all observation angles, the polarizers in the front and in the back will be crossed at 90°.

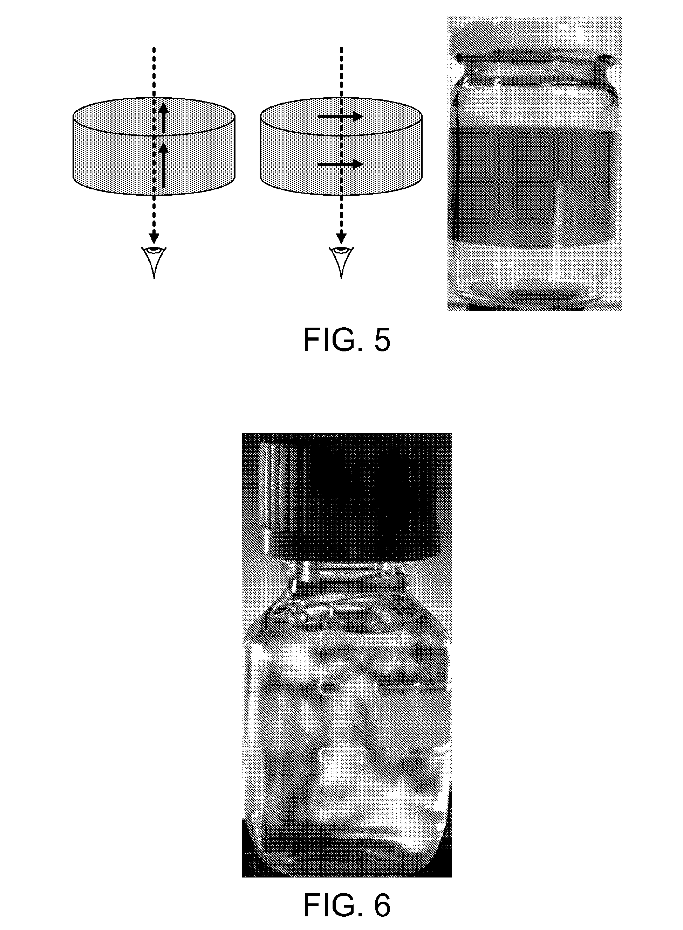

If the band is cut at 90° or 0° relative to the polarization angle and is wrapped around the bottle, the effect will be equivalent to two polarizers with an angle of 0° on a square bottle (Figure 3), meaning that the background will be less dark (Figure 5). From all observation angles, the polarizers in the front and in the back will always be parallel.

The liquid crystals in these bottles produce the same visual effects as in the square bottles.

In conclusion, all angles allow visualization of the liquid crystals. However the best result is obtained when they are crossed at 90°. For colored drinks, it might be more appropriate to use polarizers with parallel directions, to have a lighter background.

Example 5 shows that liquid crystals are visible in coloured water solutions.

A colored water solution was produced by dispersing one drop of ink (Universal text marker Edding 23, Edding, Germany) in 200 mL water adjusted at pH2. The 2% liquid crystals solution was then incorporated at a ratio of 1:1 to the coloured water solution (Figure 6), leading to a final liquid crystal concentration of 1%.

Example 6 shows that liquid crystals are stable and visible in water solutions with a high sugar content.

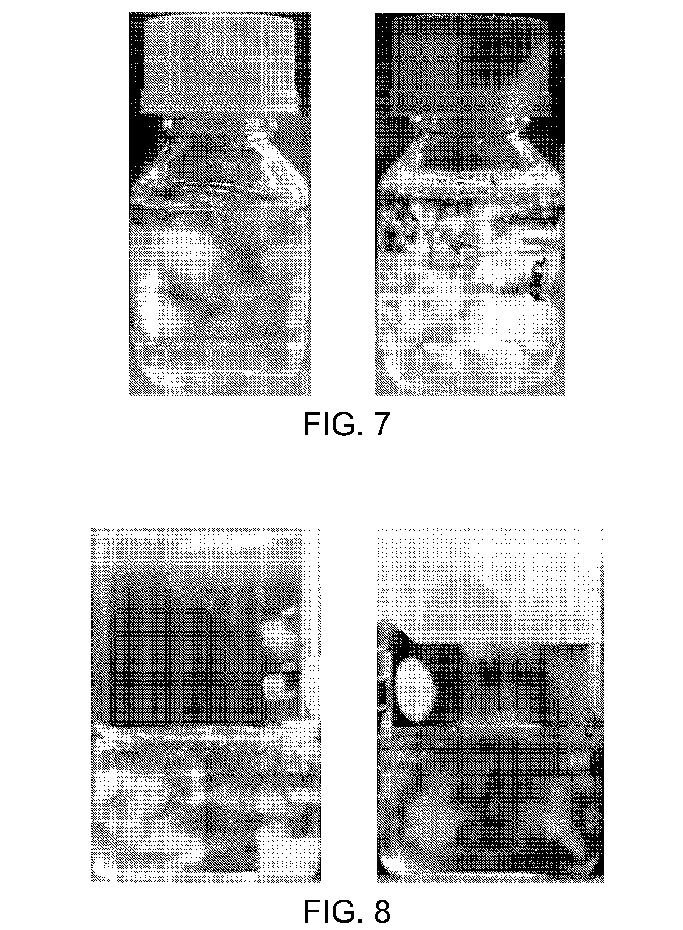

Two alternatives were tested (Figure 7):
- Sugar was directly solubilized in a 2% liquid crystal solution at pH2, in a concentration of 10% (which is the average concentration in sweet beverages).
- A solution of 20% sugar in water adjusted at pH 2 was prepared, and was then mixed with a 2% liquid crystals solution at pH2. Therefore the final concentration of the sugar was 10% and the final concentration of the liquid crystals was 1%.

The liquid crystals remained visible in 10% sugar solutions. The intensity of the visual effects was higher with 2% liquid crystals than with 1%. This experiment also demonstrated that sugar can be directly solubilized in the liquid crystal containing solution (pathway 1).

Example 7 shows that liquid crystals can be successfully incorporated into commercial beverages.

Liquid crystals were incorporated in commercial beverages: a transparent soda (7-up) and a sweet coloured beverage (Ice Tea). Both beverages had a pH of around 3.

A 2% liquid crystal solution in pH 2 water was mixed with the commercial beverage at a weight ratio of 1:1 (Figure 8).

The final liquid crystal concentration was 1%. In both cases the liquid crystals were visible, the most intense visual effect was achieved for the transparent soda.

These experiments show that:
- the liquid crystals can be incorporated and visualized even in acidic beverages (pH 3-3.5),
- the liquid crystals can be incorporated and visualized in transparent or colored beverages,
- the liquid crystals can be incorporated and visualized in carbonated beverages.

## Claims

1. At least partially transparent container containing an at least partially transparent aqueous non-alcoholic composition,
**characterized in that**
- at least a part of the surface of the container is covered by at least one polarizer, and
- the composition comprises food -grade liquid crystals.

2. Container in accordance with claim 1, wherein the container is made from a material selected from the group consisting of glass and plastics, such as PET or PP.

3. Container in accordance with one of the preceding claims, wherein the at least one polarizer is attached to the outer surface of the container.

4. Container in accordance with one of claims 1-2, wherein the at least one polarizer is an integral component of the container wall.

5. Container in accordance with one of the preceding claims, wherein the at least one polarizer is selected from the group consisting of absorptive polarizers, linear polarizers or combinations thereof.

6. Container in accordance with one of the preceding claims comprising more than one polarizer, wherein the directions of the polarizers differ from each other.

7. Container in accordance with one of the preceding claims comprising an even number of polarizers, wherein the angle between the directions of polarizers located opposite to one another is identical for all polarizer pairs, whereas neighboring polarizers differ in direction.

8. Container in accordance with one of the preceding claims, wherein the food grade liquid crystals are protein fibril assemblies, such as β-lactoglobulin crystals.

9. Container in accordance with one of the preceding claims, wherein the food grade liquid crystals are present in an amount of at least 0,04 mg/ml of the composition and have average dimensions of at least 400 nm in the longest dimension.

10. Container in accordance with one of the preceding claims, wherein the food grade liquid crystals are selected from the group consisting of thermotropic liquid crystals, lyotropic liquid crystals or combinations thereof.

11. Container in accordance with one of the preceding claims, wherein the food grade liquid crystals are present in a lyotropic liquid crystal phase selected from the group consisting of the discontinuous cubic phase, the hexagonal phase, the lamellar phase, the bicontinuous cubic phase, the reverse hexagonal columnar phase, the inverse cubic phase, or combinations thereof ; and/or in a thermotropic liquid crystal phase selected from the group consisting of the nematic phase, the smectic phases, the chiral phases, the blue phases, the discotic phases, or combinations thereof.

12. Container in accordance with one of the preceding claims wherein the container and the composition together have a degree of transparency of at least 75 % for at least a fraction of visible light, such as violet light with a wavelength of 380-450 nm, blue light with a wavelength of 450-495 nm, green light with a wavelength of 495-570 nm, yellow light with a wavelength of 570-590 nm, orange light with a wavelength of 590-620 nm, and red light with a wavelength of 620-750 nm.

13. Container in accordance with one of the preceding claims wherein the at least partially transparent composition is present in liquid or gel form and/or is selected from the group of consisting of water based drinks, energy drinks, shower gels, detergent compositions.

14. Container in accordance with one of the preceding claims, wherein the composition is a beverage with a caloric density in the range of 0,01 to 1 kcal/ml with at least 50 % of the calories derived from carbohydrates for protein-enriched beverages.
